# EUROPEAN PATENT SPECIFICATION

(11) **EP 3 600 955 B1**
(45) Date of publication and mention of the grant of the patent: **30.06.2021**
(21) Application number: 18713894.6
(22) Date of filing: 26.03.2018
(51) Int. Cl.: B60N 2/28

(54) **CHILD SAFETY SEAT FOR A VEHICLE**
KINDERSICHERHEITSSITZ FÜR EIN FAHRZEUG
SIÈGE DE SÉCURITÉ POUR ENFANT POUR UN VÉHICULE

(30) Priority: 27.03.2017 NO 20170498
(43) Date of publication of application: 05.02.2020
(73) Proprietor: HTS Hans Torgersen & Sønn AS, 3535 Krøderen (NO)
(72) Inventor: VAN DER VEER, Erik, 3533 AD Utrecht (NL); GUTTER, Hans, 3741 PH Baarn (NL); VAN MOURIK, Okke, 3514 BS Utrecht (NL)
(74) Representative: Onsagers AS
(86) International application number: PCT/EP2018/057653
(87) International publication number: WO 2018/178017

(56) References cited:
- CN-A- 104 859 493
- CN-U- 202 557 341
- CN-U- 202 911 586
- CN-U- 204 712 908
- DE-U1-202014 103 298
- JP-A- 2015 074 313

## Description

The present invention concerns a child safety seat in accordance with the introductory part of the independent claim.

The present invention concerns a child safety seat for use in a passenger seat of a vehicle, which child safety seat can be fastened to a passenger seat of the vehicle by attachment means provided in the vehicle, for instance a safety seat belt such as a three-point safety belt or standard anchorage units (so-called Isofix connectors).

The present invention also relates to a method for installation of a child safety seat in a vehicle

More particularly the present invention concerns a child safety seat and a method to install the child safety seat in the passenger seat of the vehicle, when a sitting area of the passenger seat forms an angle with a horizontal plane, the angle for instance being between 0 - 25 degrees, where the method will allow correct installation of the child safety seat independently of the angle the sitting area of the passenger seat is having.

Child safety seating products are designed to protect children in vehicles from the effects of impacts or other sudden changes in motion (e.g. sudden deceleration). Child safety seats, commonly referred to simply as child seats, may be used in a variety of vehicles with a variety of seating configurations. It is important for a child safety seat to be properly secured to the vehicle seat to protect the occupant, particularly during an impact.

Furthermore, over the last years safety measures have emerged as a critical factor for vehicles, and various vehicular child safety seats have been developed as a device for ensuring the safety of a new-born baby, an infant, a toddler and a child of school age (referred generally as "child" hereinafter) riding on a vehicle.

The child safety seats are then designed to be fitted into the vehicle seat and secured to the vehicle seat in appropriate ways, for instance by using Isofix connectors or by using a vehicle's adult lap and diagonal belt part of the vehicle seat belt, or sometimes just the lap belt part of the vehicle seat belt.

Furthermore, the child safety seats are often padded with different energy absorbing materials, which will reduce the forces a child is exposed to during a collision (i.e. a side impact crash), for instance when head or other parts of the child "hits" the child safety seat, as these forces may be very high. However, vehicle seats, vehicle seat belts, anchorage points etc. vary greatly between different models of vehicles, which may result in that a child safety seat is not fitted correctly into the vehicle seat.

Such child safety seats are mounted on a back seat or a front seat of the vehicle. The angle of a sitting area, on which sitting area the child safety seat is placed and installed, can be different from vehicle to vehicle. The sitting area can, for instance, be almost flat, or forming an angle of more than 20 degrees with a horizontal plane. When the child safety seat is placed on the sitting area of the vehicle seat, the inclination of the child safety seat will therefore be dependent on the angle the sitting area of the vehicle seat forms with the horizontal plane.

When a child safety seat is arranged in a vehicle seat, the angle of the sitting area of the vehicle seat is forming relative to a horizontal plane can be very negative for both a sleeping position and an upright position of the child safety seat. If, for instance, the child safety seat is arranged rearward facing and in a sleeping position and the angle between the sitting area of the vehicle seat and the horizontal plane is small, the child safety will be tilted to even more reclined angle, this resulting in that the child or infant seated in the child safety seat, in a collision, and especially in a collision from front, could slide out of the child safety seat. Similarly, if the child safety seat is arranged rearward facing and in an upright position and the angle between the sitting area of the vehicle seat and the horizontal plane is greater, the child safety seat will be tilted to an even more upright position, where this could result in that a neck of a baby or a very young child is bended and the head falls down towards the chest of the baby whereby this could lead to troubles with breathing, and/or that the spine and/or the neck of the child or infant is exposed to undesirable loads.

If the child safety seat is arranged forward facing and in an upright position, and the angle between the sitting area of the vehicle seat and the horizontal plane is small the child safety seat will be tilted to an even more upright position, where this could result in that the spine and/or the neck of the child or infant is exposed to undesirable loads. Similarly, if the child safety seat is arranged forward facing and in a sleeping position and the angle between the sitting area of the vehicle seat and the horizontal plane is greater, the child safety seat will be tilted to an even more reclined position, this resulting in that the child or infant seated in the child safety seat, in a frontal collision, could slide out of the child safety seat.

Based on the above-mentioned compatibility problems, a need has arisen for a standard system or arrangement for fitting a child safety seat correctly into a vehicle seat.

EP 931.693 A2 discloses a child seat, where the child seat has a base frame and an inclination angle-changing base. The base and the inclination changing base are journaled rotatable about an axis of rotation at the front portion. At a rear end side, is provided an angle changing apparatus for adjusting a space between the base and the inclination angle-changing base. This structure provides a child seat allowing adjustment of the angle of inclination of a support surface supporting a child.

JP 2015074313 A discloses a child seat for a vehicle, where the child seat includes: a seat body which may rotate around an axis extending in a vertical direction; a seat body base part provided on a lower surface of the seat body, the seat body base part where a center thereof is set to the axis; a base body which receives the seat body base part; and base part engagement members which are provided at the base body and are selectively moved to an engagement position where the base part engagement members undetachably engage with the seat body base part while allowing rotation of the seat body and an engagement release position where the base part engagement members are disengaged from the seat body base part.

WO 2015/025429 A1 discloses a support leg and a child safety seat provided with a support leg, where the support leg is equipped with a leg part, and a position-determining mechanism for determining the length of the leg part. The position-determining mechanism is a mechanism having a housing, a slider, and a leg-part operation lever, wherein: the slider is capable of sliding between a lock position for locking the extension/contraction of the leg part, and a release position for releasing the lock; an operation tab is formed on one end of the leg-part operation lever so as to be positioned outside the housing; a connecting part is formed on the other end of the leg-part operation lever so as to be positioned inside the housing and connected to the slider; when the leg-part operation lever rotates in a direction causing the operation tab to approach the leg part, the connecting part moves in a direction so as to separate from the leg part and the slider slides to the release position; and when the leg-part operation lever rotates in a direction causing the operation tab to separate from the leg part, the connecting part moves in a direction so as to approach the leg part and the slider slides to the lock position.

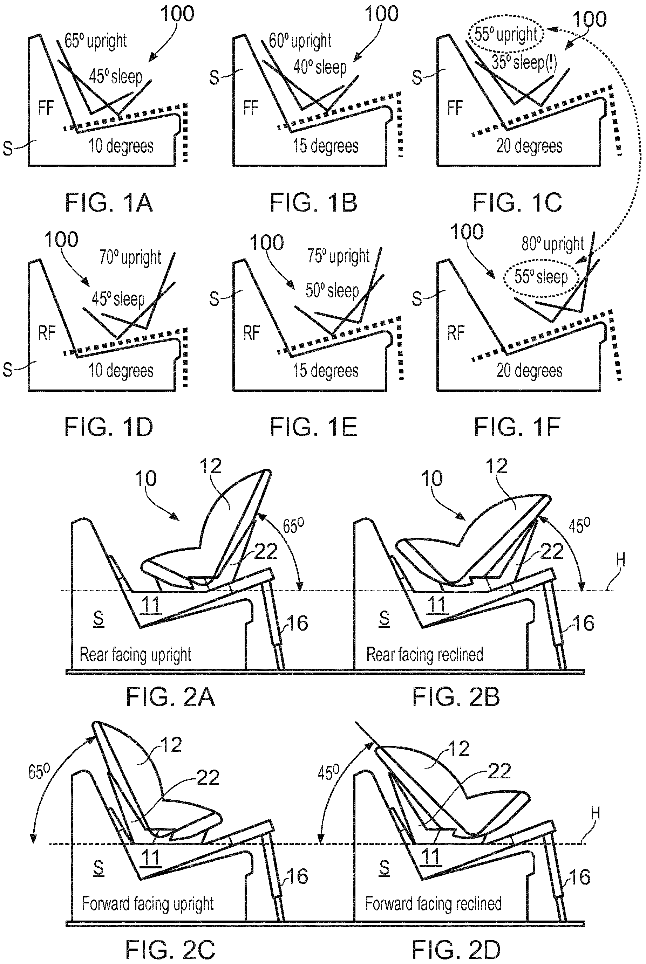

EP 0 164 909 A2 discloses a child safety seat, where the child safety seat has a frame which extends between the floor of a vehicle in which it is mounted and the backrest of a seat of the vehicle. A seat shell is slidable on curved portions of side rails of the frame and can be secured in a desired position by engagement of a spring-loaded bolt at each side of the seat in one of a series of apertures in each side rail. In addition to the rearwardly-facing reclined position of Figure 2, the shell can adopt reclined and upright forwardly-facing positions. The seat can also be converted into a pram. Figures 8 to 12 show a second child's safety seat, in which the shell is attached to side rails by two connections only at each side.

WO 2005/108155 A2 discloses a base for a child safety support, where the base comprises an upper moulding and a lower moulding screwed and clipped together. The upper moulding comprises a pair of front humps and a pair of rear humps with a flat portion between the pairs. The humps have molded recesses for the front and rear anchor bars of a conventional infant carrier. Below release button the base has formation for pivotal connection of foot prop is clipped up under the base, anti-rebound flap is folded against the prop and ISOFIX latches are pivoted in towards the front of the base. For use, ISOFIX latches are turned backwards, anti-rebound member is swung around from below to above the base and foot prop is extended down to abut the floor. To fit infant carrier, its anchor bars are engaged in recesses and the infant carrier is pushed down to push hooks away.

CN 202 557 341 U discloses a child seat comprising a base, a seat and a locking mechanism, wherein the seat is rotatably arranged on the base; the locking mechanism is arranged between the base and the seat and comprises a locking sliding bolt and a plurality of locking grooves; the locking sliding bolt is slidably arranged on one of the base and the seat; the plurality of locking grooves are arranged on the other of the base and the seat and are distributed in the peripheral direction with the axle center of a first rotating shaft as the centre of a circle; the locking mechanism further comprises a sliding bolt elastic member which enables the locking sliding bolt to be stably inserted in the locking grooves; and an inclining plane facilitating the locating sliding bolt in engaging or disengaging from the deepest places of the locating grooves is arranged on the locating sliding bolt and/or each locating groove.

DE 20 2014 103298 U1 discloses a rotary automobile safety seat. The rotary automobile safety seat comprises a seat body, a base arranged at the bottom of the seat body, and a rotating mechanism arranged between the seat body and the base, wherein the rotating mechanism comprises a rotating base upper cover fixedly connected with the seat body, a rotating base lower cover slidingly connected with the base, and a pivoting device for pivoting the rotating base upper cover to the rotating base lower cover; and the rotating mechanism further comprises an abutting device arranged between the rotating base upper cover and the rotating base lower cover for limiting the vertical movement of the rotating base upper cover relative to the rotating base lower cover.

CN 104 859 493 A discloses a child safety car seat, which comprises a base and a seat, wherein the base is used for being arranged on a car seat; the seat can rotate in the horizontal direction relative to the base; a rotating driving mechanism used for driving the seat to rotate relative to the base and a power assembly used for providing power for the rotating driving mechanism are arranged between the base and the seat; the rotating driving mechanism comprises rotating wheels and driving elements; the rotating wheels are fixedly arranged at the bottom of the seat; the driving elements are arranged on the base, can be cooperated with the rotating wheels and are used for driving the rotating wheels to rotate around the self-axial leads; and the axial leads of the rotating wheels and the rotating center line, relatively surrounded during the base rotation, of the base realize collinear extension. When the power assembly drives the rotating driving mechanism to work, the seat can rotate in the horizontal direction relative to the base, so that the 360-degree rotation regulation of the seat can be automatically realized.

The object of the present invention is to provide a child safety seat which can be adapted to and installed correctly in the vehicle and which offers an easy installation of the child safety seat in the vehicle, at the same time as minimizing the risk for misuse.

This object is obtained by an inventive concept of the child safety seat as defined in claim 1 and a method for installation of a child safety seat as defined in claim 14. Further embodiments of the invention are defined in the dependent claims.

In the following, the expression "forward-facing" refers to a forward driving direction of the vehicle. Using the forward driving direction of the vehicle as a reference, the terms rearward facing, upward and downward correspond to the ordinary terms when defining directions in a vehicle.

The present invention regards a child safety seat for use in a vehicle, where the child safety seat comprises a seat base, where the seat base comprises a frame structure in which frame structure a child seat is arranged, the child seat comprising a sitting section, a back section and a head section, where an adjustable floor support is connected to the frame structure, and where the child safety seat further comprises fastening means for fastening the child safety seat to a vehicle seat, wherein the frame structure comprises a first part facing a sitting section of a vehicle seat and a second part facing a back section of the vehicle seat when the child safety seat is arranged in the vehicle seat, where a support and connection device for the child seat is connected to the frame structure, where an upper surface of the support and connection device is arranged in such a way that the upper surface of the support and connection device is forming an angle with a surface of the first part of the frame structure, such that the upper surface of the support and connection device can be adjusted to a substantially horizontal position by adjusting the length of the adjustable floor support, the adjustment of the upper surface of the support and connection device to the substantially horizontal position resulting in that at least a foremost part of the seat base of the child safety seat is raised or lifted up from the sitting section of the vehicle seat.

The fastenings means for fastening the child safety seat to the vehicle seat child safety seat may be in the form of Isofix connectors and/or the child safety seat may be provided with seat belt guiding grooves, slits or the like over its surface, such that a three-point seat belt can be arranged in or over the guiding grooves, slits or the like in order to fasten the child safety seat to the vehicle seat.

The child safety seat according to the present invention may be a rotatable seat, such that the child safety seat can be rotated from a forward-facing position to a rearward facing position (and vice versa) or may be a fixed child safety seat, where the child safety seat must be lifted and turned between the forward-facing position and the rearward facing position. The rotatable child safety seat may also be arranged to allow the child safety seat to be turned to at least one position between the forward facing and the backward facing position, for instance to a position facing a vehicle door, in order to ease the insertion of a child or infant in the child safety seat and when the child or infant is to be taken out of the child safety seat.

Furthermore, the child safety seat may be adjustable or movable between an upright position and a reclined position, where the upright position is used when the child is awake, and the reclined position is used when the child is to sleep or is already sleeping.

In one embodiment of the present invention, the child safety seat is to be connected to corresponding anchoring means provided in the vehicle seats of the vehicle, whereby two Isofix connectors are connected to the frame structure. The Isofix connectors are connected to the frame structure with a distance between them. The Isofix connectors may be arranged fixedly to the frame structure, such that they cannot move relative the frame structure, but the Isofix connectors may also be arranged to be extendable from and retractable into the frame structure, such that the child safety seat could be adapted to different models of vehicles, as the vehicle seats, vehicle seat belts, anchorage points etc. can vary greatly between the models. Furthermore, the Isofix connectors may also be pivotable relative the frame structure, such that they could be adapted to different inclination of the sitting section of the vehicle seat.

One end of the Isofix connector comprises a latch or a clip that will engage with anchorage points in the vehicle seat. As these latches and anchorage points are used as standards, a skilled person will know how these are designed, and will therefore not be described further in the description.

A person skilled in the art would know that the child safety seat according to the present invention could also be designed to be used with safety seat belt provided in the vehicle, whereby the child safety seat would be provided with guiding grooves, slits or the like for the safety seat belt. Furthermore, it should be understood that the child safety seat according to the present invention could be provided without the Isofix connectors, whereby the child seat is used with the safety seat belt.

The child safety seat according to the present invention may, in one embodiment, also comprise a brace, where the front brace is connected to the frame structure at an opposite side of the floor support. The brace will together with the floor support "fixate" the child safety seat and prevent the child safety seat to rotate around the anchorage means in the event of a front or rear collision of the vehicle.

The adjustable floor support comprises an inner sleeve arranged in an outer sleeve, where the inner and outer sleeves can be moved relative each other. The outer sleeve may be provided with a plurality of holes over its length and the inner sleeve may comprise a locking pin or the like cooperating with the holes in the outer sleeve, or vice versa, such that the adjustable floor support can be locked in desired position. A person skilled in the art knows how such a floor support can be formed or designed, whereby this is not described further herein.

The frame structure may be manufactured from a plurality of solid or hollow beam elements that are connected to each other to form the frame structure. The beam elements may be connected to each other by welding, fastening means or the like. The frame structure may also comprise one or more plate elements, where the one or more plate elements and the beam elements are being connected to each other in order to form the frame structure.

In order to minimize the movement of a child arranged in the child safety seat during a collision, the head section and/or the back section of the child safety seat can be provided with protective wings. The protective wings will then prevent a part of the child, for instance the head of the child, from "rolling" out of the child safety seat during a collision. Furthermore, the protective wings may be padded with energy absorbing material over at least a part of their surface.

The present invention also relates to a method for installation of a child safety seat in a vehicle comprising the features of claim 14.

The method for installation of the child safety seat into a vehicle may further comprise the following step: when the fastening means are in the form of Isofix connectors, connecting the Isofix connectors to anchorage points in the vehicle seat, possibly also releasing and sliding out the Isofix connectors, or, when the fastenings means are in the form of guiding grooves or slits, then arranging and guiding a vehicle belt of the vehicle over the guiding grooves or slits to connect the vehicle belt to attachment points in the vehicle seat.

The foregoing and other features of the present invention will become apparent to one skilled in the art to which the present invention relates upon consideration of the following description of the invention with reference to the accompanying drawings, wherein:
Figures 1A-1F show in an illustrative way how a child safety seat according to prior art is affected by different angles a sitting area of a passenger seat forms with a horizontal plane,
Figures 2A-2D show in an illustrative and schematic way a child safety seat according to the present invention, where figures 2A-2B show the child safety seat arranged rearwardly facing, and figures 2C-2D show the child safety seat arranged forwardly facing,
Figures 3A-3C show a child safety seat according to the present invention mounted in a rearward facing position, where figure 3A is a front view of the child safety seat, figure 3B is a side view of the child safety seat and figure 3C is an exploded view of the child safety seat,
Figures 4A-4C show the child safety seat according to the present invention mounted in a forward-facing position, where figure 4A is a rear view, figure 4B is a side view and figure 4C is an exploded view,
Figure 5 show an arrangement to bring the child safety seat according to the present invention between an upright position and a reclined position,
Figures 6A-6D show how the child safety seat according to the present invention is adjusted and installed in a passenger seat of a vehicle, and
Figures 7A-7B show an alternative embodiment of the child safety seat according to figures 3A-4C, where a safety seat belt is used, seen in side view (figure 7A) and front view (figure 7B).
Figures 1A-1F is an explanation how a child safety seat 100 according to prior art is affected when installed in a passenger seat S of a vehicle (not shown), where the child safety seat 100 in the figures 1A-1C is mounted in a forward-facing position FF, while the child safety seat 100 in the figures 1D-1F is mounted in a rearward facing position RF. A sitting area of the passenger seat S, on which sitting area the child safety seat 100 is placed, is shown with different inclination relative to a horizontal plane, where figures 1A and 1D show an inclination angle of 10 degrees relative the horizontal plane, figures 1B and 1E show an inclination angle of 15 degrees relative the horizontal plane and figures 1C and 1F shown an inclination angle of 20 degrees relative the horizontal plane.

The prior art child safety seat 100, which is shown very schematically in figures 1A-1F, is designed to recline 20 degrees, between an upright position and a reclined position. Such a child safety seat 100 is optimized for a vehicle bench that is provided with an angle of 10 degrees relative the horizontal plane. This will give that, whether the child safety seat 100 is arranged forward facing or rearward facing in a vehicle seat S, the recline angle of the upright position of the child safety seat 100 and the recline angle of the reclined position (sleeping position) of the child safety seat 100 are identical.

In the upright position of the child safety seat 100 the child safety seat 100 forms an angle of 65 degrees with the sitting area of the passenger seat S, and in the reclined position of the child safety seat 100 the child safety seat 100 forms an angle of 45 degrees with the sitting area of the passenger seat S.

When the same child safety seat 100 is mounted in a sitting area of a passenger seat S having an angle of 15 degrees relative the horizontal plane (see figure 1B and IE), the upright position of the child safety seat 100 will form 60 degrees relative to the sitting area of the passenger seat S when the child safety seat 100 is forward facing and 70 degrees relative to the sitting area of the passenger seat S when the child safety seat 100 is rearward facing. In the reclined position of the child safety seat 100, the child safety seat 100 will form 40 degrees relative to the sitting area of the passenger seat S when the child safety seat 1 is forward facing and 50 degrees relative to the sitting area of the passenger seat S when the child seat 1 is rearward facing.

When the same child safety seat 100 is mounted in a sitting area of a passenger seat S having an angle of 20 degrees relative the horizontal plane, as shown in figures 1C and 1F, the upright position of the child safety seat 100 will form 55 degrees relative to the sitting area of the passenger seat S when the child safety seat 100 is forward facing and 75 degrees relative to the sitting area of the passenger seat S when the child safety seat 100 is rearward facing. In the reclined position of the child safety seat 100, the child safety seat 100 will form 35 degrees relative to the sitting area of the passenger seat S when the child safety seat 100 is forward facing and 55 degrees relative to the sitting area of the passenger seat S when the child seat 100 is rearward facing.

Thus, as can be seen from the figures, the angle the child safety seat 100 forms relative to the sitting area of the passenger seat S will depend on the inclination the sitting area of the vehicle seat S forms relative to the horizontal plane. In an upright position of the child safety seat 100, the angle the child safety seat 100 forms relative to the sitting area of the passenger seat S will vary between 65 degrees to 55 degrees when the child safety seat 100 is forward facing and between 65 degrees to 75 degrees when the child safety seat 100 is backward facing position. In a reclined position of the child safety seat 100, the angle the child safety seat forms relative to the sitting area of the passenger seat S will vary between 45 degrees to 35 degrees when the child safety seat 100 is forward facing and between 45 degrees to 55 degrees when the child safety seat is backward facing.

Especially for babies and very young children, being mounted in a rearward facing position, it is crucial that the upright position of the child safety seat do not form an angle of more than 45 degrees relative to the sitting area of the passenger seat S, as this could result in that the head of the baby/very young child fall down towards the chest. This will bend the neck of the baby/very young child, where this could lead to troubles with breathing.

Similarly, if a forward-facing child safety seat is too much reclined in the reclined position of the child safety seat, there is a higher risk of the child sliding down (submarining) in a frontal impact vehicle crash.

Figures 2A-2D show in an illustrative and schematic way how a child safety seat 10 according to the present invention is effected by the different inclination a sitting area of a vehicle seat S forms relative to a horizontal plane H, where figures 2A-2B show the child safety seat 10 mounted in a rearward facing position and in an upright position (figure 2A) and in a reclined position (figure 2B), while figures 2C-2D show the child safety seat 1 mounted in a forward facing position and in an upright position (figure 2C) and in a reclined position (figure 2D).

The inclination of the sitting area of the vehicle seat S according to figures 2A-2D vary between 10-20 degrees relative the horizontal plane H.

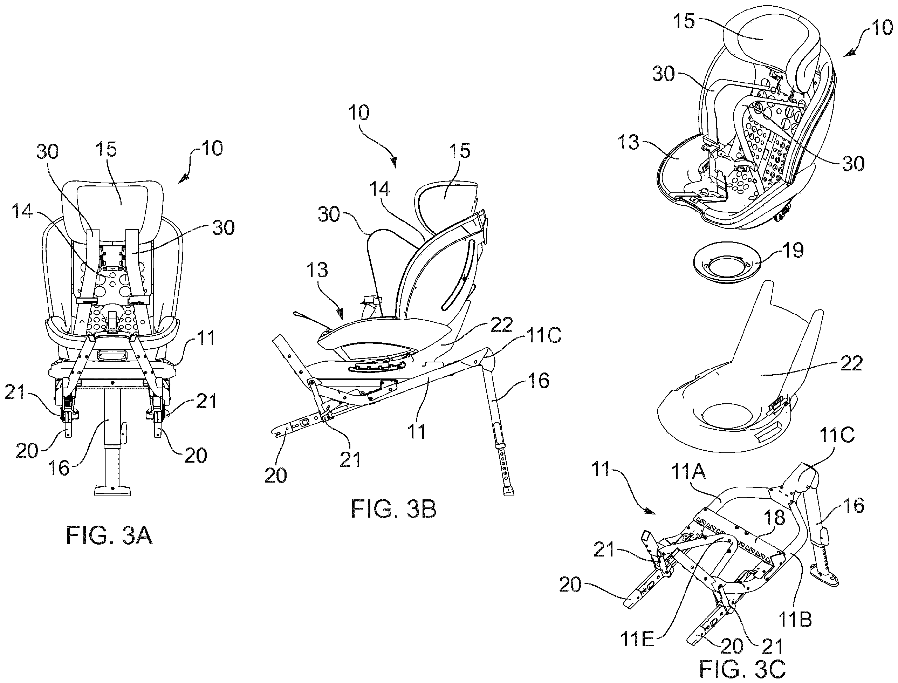

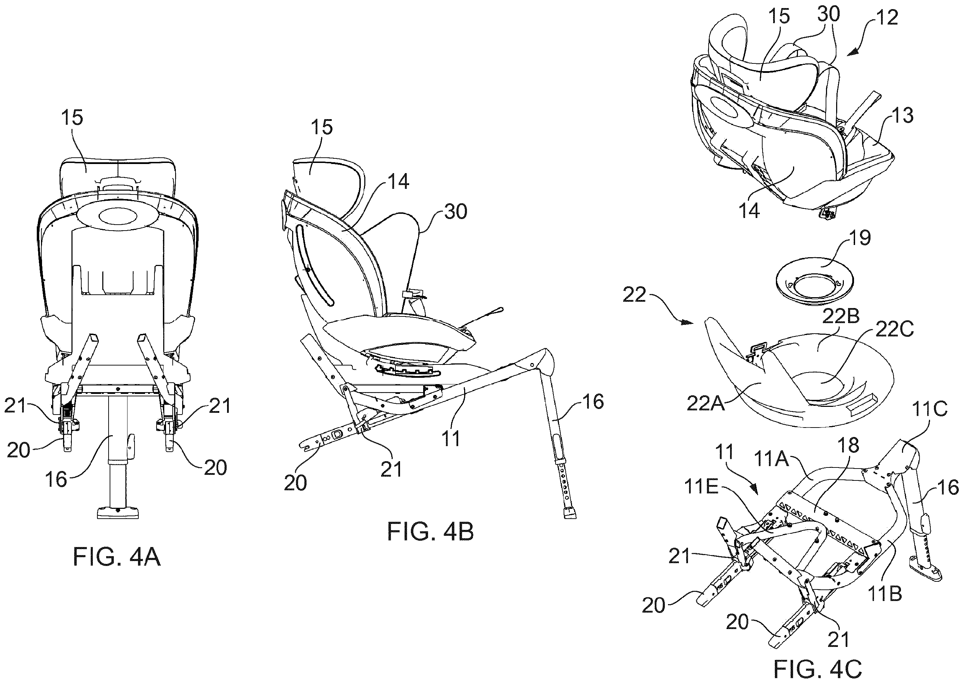

The child safety seat 10 comprises a frame structure 11, a connection and locking device (not shown here, see also figures 3C and 4C), an intermediate child seat frame 22 and a child seat 12. The child seat 12 is connected to, via the intermediate child seat frame 22 and in appropriate ways, to the support and connection device 19 and the intermediate child seat frame 22 is, together with the child seat 12, connected to the frame structure 11. How said elements 11, 12, 22 are constructed or designed and connected together will be explained in detail in connection with other figures.

The child safety seat 10 according to the present invention is connected to the vehicle seat S by means of fastening means (not shown), where such fastening means can, for instance, be Isofix connectors and/or belt guiding grooves, slits or the like formed in an outer surface of the child safety seat 10, where the belt guiding grooves, slits or the like will cooperate with a vehicle belt in order to fasten the child safety seat 10.

Furthermore, an adjustable floor support 16 is connected to the frame structure 11 of the child safety seat 10. As indicated in the figures, the child safety seat 10 according to the present invention may also comprise a brace.

When the child safety seat 10 is arranged on a sitting area of a vehicle seat S, an underside of the frame structure 11 of the child safety seat 10 will be in abutment with the sitting area of the vehicle seat S. The length of the adjustable floor support 16 is then adjusted in order to lift the child safety seat 10 up from the sitting area of the vehicle seat S, until the support and connection device 19 is brought to a substantially horizontal position, whereby the child safety seat 10 according to the present invention is brought to a correct installation position.

As can be seen from the figures 2A-2D, the recline angle of the upright position of the child safety seat 10 and the recline angle of the reclined position of the child safety seat 10 is the same, irrespective of the child safety seat 10 according to the present invention is mounted forward facing or backward facing.

Figures 3A-3C show a child safety seat 10 according to the present invention is mounted in a rearward facing position in a vehicle seat (not shown) of a vehicle (not shown), seen from front (figure 3A), from a side (figure 3B) and in an exploded view (figure 3C). The child safety seat 10 comprises a frame structure 11 in which frame structure 11 a child seat 12 is arranged. The child seat 12 comprises a head section 15, a back section 14 and a sitting section 13.

The child safety seat 10 is further provided with a restraint harness system 30 to restrain the child or infant within the child seat 12, where such harness arrangement can be a five-point belt or the like.

The frame structure 11 comprises a first and second lateral element 11A, 11B, where the first and second lateral elements 11A, 11B at one end are connected to each other through a support element 11C for a floor support 16. At an opposite end of the first and second lateral elements 11A, 11B, the first and second lateral elements 11A, 11B are connected to each other through a connection element (not shown), such that the first and second lateral elements 11A, 11B, support element 11C and connection element form a receiving structure for the child seat 12.

Furthermore, a transversal beam 18 and a V-formed element 11E are also connected to the frame structure 11. The transversal beam 18 will then be connected to the each of the first and second lateral elements 11A, 11B through the transversal beam's respective ends, while a first leg of the V-formed element 11E is connected to the first lateral element 11A and a second leg of the V-formed element 11E is connected to the second lateral element 11B. An apex of the V-formed element 11E is connected to the transversal beam 18, approximately at a middle of the transversal beam 18. The transversal beam 18 is connected to the first and second lateral elements 11A, 11B in such a way that it forms an angle with the frame structure 11, where the angle, for instance, can be 20 degrees. The transversal beam 18 and the V-formed element 11E will, together with the frame structure 11, support the child seat 12 when the child seat 12 is arranged in the frame 11.

A connection and locking device 19, in the form of a ring, is arranged between the child seat 12 and the frame structure 11, where the connection and locking device 19 is used provide a fixation between the child seat 12 and the frame structure 11. The connection and locking device 19 will then, in appropriate ways, be connected to a base (i.e. a lower surface of the child seat 12) of the child seat 12 and to an upper surface of the transversal beam 18.

An adjustable floor support 16 is connected to the support element 11C for the floor support 16, where the adjustable floor support 16 can be brought from a stowed position underneath the child safety seat 10 to an operable position where the adjustable floor support 16 supports the child safety seat 10. The adjustable floor support 16 is in a known manner made to be retractable and extendable. As a person skilled in the art know how this can be done, this is not described further herein.

The frame structure 11 comprises also two Isofix connectors 20. One Isofix connector 20 is then, through a connection piece 21, connected to each of the first and second lateral elements 11A, 11B. The Isofix connectors 20 are in a known manner made to be retractable and extendable, such that the Isofix connectors 20 can be brought from a retracted position to an extended position and vice versa.

However, it should be understood that the child safety seat 10 according to the present invention can also be used in a forward-facing position, as shown in figures 4A-4C.

The child safety seat 10 according to the present invention may be designed or formed to be adjusted between a forward-facing position and a rearward facing position, or the child safety seat 10 may be designed as a fixed child safety seat. If the child safety seat 10 is adjustable, then the child safety seat 10 can be rotated or turned from a forward-facing position to a rearward facing position or vice versa by means of a rotating arrangement or by means of a detachable arrangement, such that the child safety seat 10 can be brought from, for instance, a forward-facing position to a rearward facing position, without having to change the position of the frame structure 11.

If the child safety seat 10 is designed or formed as a fixed child safety seat, then the child safety seat can be used in only as a forward-facing child safety seat or as a rearward facing child safety seat.

When the child safety seat 10 is designed to be adjustable between a forward-facing position and a rearward facing position, then an intermediate child seat frame 22 is arranged between the connection and locking device 19 (the connection and locking device 19 being connected to the child seat 12) and the frame structure 11, where the intermediate child seat frame 22 in appropriate ways is connected to the child seat 12. The intermediate child seat frame 22 will then be connected to the child seat 12 by means of bolts, screws or the like (not shown). Furthermore, in this embodiment of the present invention, the connection and locking device 19 and the base of the child seat 12 are designed to allow a rotation between the child seat 12 and the frame structure 11 in order to allow the child safety seat 10 to be brought from, for instance, a forward-facing position to a rearward facing position. As the intermediate child seat frame 22 is connected to the child seat 12, the intermediate child seat frame 22 will follow the "movement" of the child seat 12 when the child safety seat 10 is adjusted between the two positions.

If the child safety seat 10 according to the present invention is designed or formed as a fixed child safety seat, i.e. a child safety seat which can only be used in a forward-facing position or a rearward facing position, then the connection and locking device 19 is fixedly connected to both the base of the child seat 12 and to the transversal beam 18, and the intermediate child seat frame 22 can be omitted from this embodiment of the child safety seat 10.

Furthermore, the child safety seat 10 according to the present invention is provided to be adjusted between an upright position and a reclined position, where an infant or a child is arranged in the upright position when not asleep and in the reclined position when the infant or child is to sleep or when already fallen asleep.

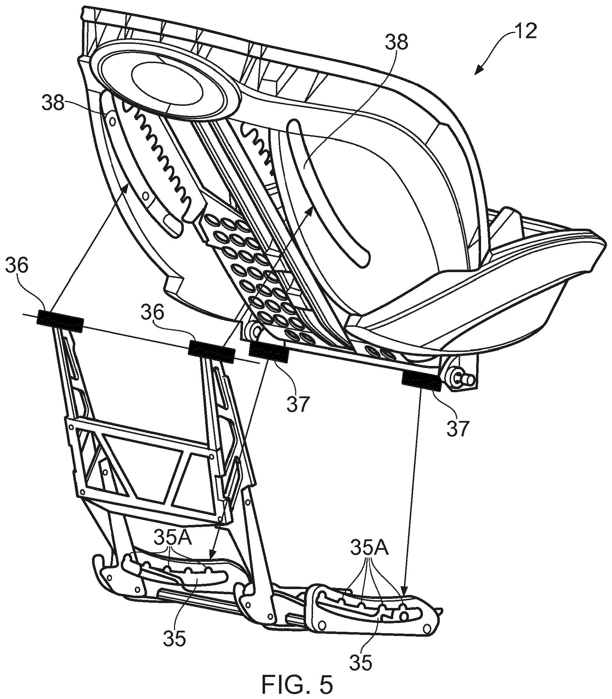

In the embodiment of the child safety seat 10 where the child safety seat 10 is designed or formed as a fixed child safety seat (i.e. where the intermediate child seat frame 22 is omitted), this is obtained by providing each of the first and second lateral elements 11A, 11B of the frame structure 11 with a groove or slit 35 and an upper part of each of the first and second lateral elements 11A, 11B with a bolt 36 or pin or the like. The child seat 12 is then provided with a corresponding bolt 37 or pin on each of its sides, at a lower part or underside of the child seat 12, where each of these bolts 37 or pins will be arranged in the corresponding groove or slit 35 in the frame structure 11, cooperating with the groove or slit 35. Furthermore, a back side of the child seat 12 is provided with two separate spaced apart grooves or slits 38, where the grooves or slits 38 are arranged in an area of an upper part of the child seat 12 and on opposite sides of the child seat 12. Each of these grooves or slits 38 will cooperate with the bolt 36 or pin arranged on the upper part of the first and second lateral elements 11A, 11B. As the grooves or slits 35 provided in the frame structure 11 are designed with a plurality of spaced apart recesses 35A, the bolts 37 or pins provided in the child seat 12 can be released or removed from one recess 35A and moved to another recess 35A in order to lower or rise the child seat 12 The bolts 36 or pins provided in the frame structure 11 will then "follow" the grooves or slits 38 provided in the child seat 12 through the adjustment of the child safety seat 10 between the upright and the reclined position. The above arrangement is shown in figure 5.

In figures 4A-4C is shown how the child safety seat 10 according to the present invention is arranged in a forward-facing position in a vehicle seat (not shown) of a vehicle (not shown), seen from front (figure 4A), from a side (figure 4B) and in an exploded view (figure 4C), where the child safety seat 10 is designed or formed to be adjustable between a forward-facing position and a rearward facing position. The child seat 12 comprises a head section 15, a back section 14, a sitting section 13 and a base 16 comprising a rotation plate 21.

The child safety seat 10 is further provided with a restraint harness system 30 to restrain the child or infant within the child seat 12, where such harness arrangement can be five-point belt or the like.

The frame structure 11 comprises a first and second lateral element 11A, 11B, where the first and second lateral elements 11A, 11B at one end are connected to each other through a support element 11C for a floor support 16. At an opposite end of the first and second lateral elements 11A, 11B the first and second lateral elements 11A, 11B are connected to each other through a connection element (not shown), such that the first and second lateral elements 11A, 11B, support element 11C and connection element form a receiving structure for the child seat 12.

Furthermore, a transversal beam 18 is also connected to the frame structure 11, i.e. to each of the first and second lateral elements 11A, 11B, where the transversal beam 18 supports the child seat 12 when the child seat 12 is arranged in the frame structure 11. A V-formed element 11E will also support the child seat 12, where a first leg of the V-formed element 11E is connected to the first lateral element 11A and a second leg of the V-formed element 11E is connected to the second lateral element 11B. An apex of the V-formed element 11E is connected to the transversal beam 18, approximately at a middle of the transversal beam 18. The transversal beam 18 is connected to the first and second lateral elements 11A, 11B in such a way that it forms an angle with the frame structure 11, where the angle, for instance, can be 20 degrees.

An intermediate child seat frame 22 is connected to the transversal beam 18 in appropriate ways, where the intermediate child seat frame 22 comprises a back section 22A and a seat section 22B. The seat section 22B is provided with an opening 22C, which opening 22C is adapted to receive a connection and locking device 19 for the base of the child seat 12 and the transversal beam 18 of the frame structure 11.

The connection and locking device 19 will then be arranged within the opening 22C and connected to the transversal beam 18, in order to connect the intermediate child seat frame 22 and the connection and locking device 19 fixedly to the transversal beam 18.

The connection and locking device 19 is further provided with locking means for the base 16, such that the child seat 12 can be connected to the frame structure 11. The base 16 is then provided with locking means that will cooperate with locking means provided in the connection and locking device 19.

Furthermore, the child safety seat 10 according to this embodiment is also provided to be adjusable between an upright position and a reclined position, where this is obtained by providing the intermediate child seat frame 22 with a groove or slit 35 one each side of a lower part of the intermediate child seat frame 22 and an upper part of the intermediate child seat frame 22 with two bolts 36 or pins or the like, where the bolts 36 or the pins or the like are arranged spaced apart. The child seat 12 is then provided with a corresponding bolt 37 or pin on each of its sides, at a lower part of the child seat 12, where each of these bolts 37 or pins will be arranged in the corresponding groove 35 or slit provided in the intermediate child seat frame 22. Furthermore, a back side of the child seat 12 is provided with two separate grooves or slits 38, where the grooves or slits 38 are arranged in an area of an upper part of the child seat 12 and on opposite sides of the child seat 12. Each of these grooves or slits 38 will cooperate with the bolt or pin 36 arranged on the upper part of the intermediate child seat frame 22.

As the grooves or slits 35 provided in the intermediate child seat frame 22 are designed with a plurality of spaced apart recesses 35A, the bolts 37 or pins provided in the child seat 12 can be released or removed from one recess 35A and moved to another recess 35A in order to lower or rise the child seat 12 The bolts 36 or pins provided in the intermediate child seat frame 22 will then "follow" the grooves or slits 38 provided in the child seat 12 through the adjustment of the child safety seat 10 between the upright and the reclined position. The above arrangement is shown in figure 5.

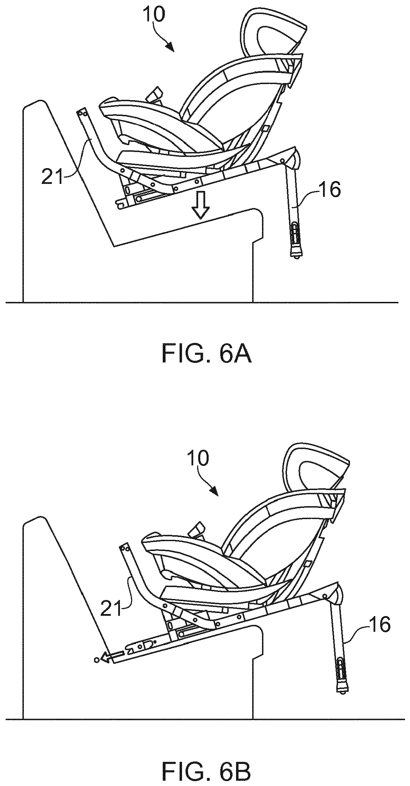

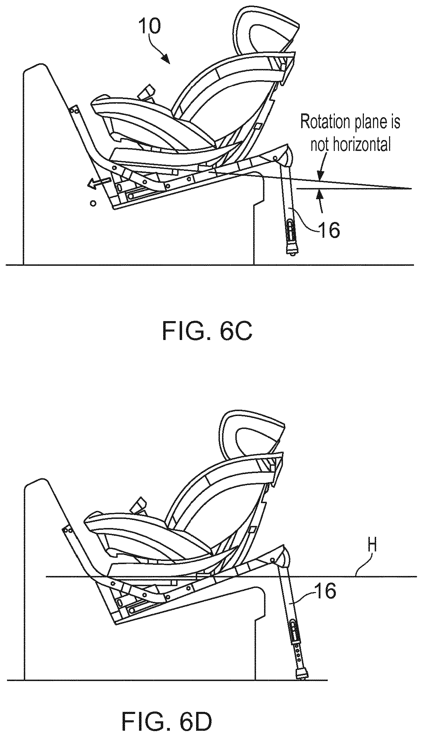

Figures 6A-6D show how a rearward facing child safety seat 10 according to the present invention is installed in a vehicle seat of a vehicle (not shown). The child safety seat 10 is placed on the vehicle seat S and thereafter the Isofix connectors 20 are released and pulled out from the frame structure 11 in order to be attached to anchorage point (not shown) provided in the vehicle seat S. However, it should be understood that such Isofix connectors 20 also could be non-extendable. When the child safety seat 10 is connected to the vehicle seat S through the Isofix connectors 20, then the child safety seat 10 is pushed towards a back section of the vehicle seat S, such that a part of the child safety seat 12 facing a back section of the vehicle seat, or possibly a front brace 21, is brought into abutment with the back section of the vehicle seat S. As can be seen from figures 6B-6D, the child safety seat 10 is now not arranged horizontally in the vehicle seat, whereby an upper surface of the support and connection device 19 will form an angle with a horizontal. The floor support 16 is then extended, so as to be set to a correct length in order to push the child safety seat 10 up to a correct angle, where the upper surface of the support and connection device 19 is parallel with the horizontal plane. As a consequence of this adjustment of the floor support 16, the child safety seat 10 is lifted up from the vehicle seat S and rotated about the anchorage points, and the part of the child safety seat 10 facing the back section of the vehicle seat, or possibly the front brace 21, is pushed even further into abutment with the back section of the vehicle seat. This will furthermore provide a "gap" between the child safety seat 10 and the vehicle seat S, where the "gap" will be largest at a forward side of the child safety seat 10 and where the "gap" will decrease towards the anchorage points.

The child safety seat 10 according to figures 6A-6D can also be installed in a vehicle seat of a vehicle (not shown) in a forward-facing position. The child safety seat 10 is then placed on the vehicle seat S and thereafter the Isofix connectors 20 are released and pulled out from the frame structure 11 in order to be attached to anchorage point (not shown) provided in the vehicle seat S. However, it should be understood that such Isofix connectors 20 also could be non-extendable. When the child safety seat 10 is connected to the vehicle seat S through the Isofix connectors 20, then the child safety seat 10 is pushed towards a back section of the vehicle seat S, such that a part of the child safety seat 12 facing a back section of the vehicle seat, or possibly a front brace 21, is brought into abutment with the back section of the vehicle seat S. As can be seen from figure 6B-6D, the child safety seat 10 is now not arranged horizontally in the vehicle seat, whereby an upper surface of the support and connection device 19 will form an angle with a horizontal. The floor support 16 is then extended, so as to be set to a correct length in order to push the child safety seat 10 up to a correct angle, where the upper surface of the support and connection device 19 is parallel with the horizontal plane. As a consequence of this adjustment of the floor support 16, the child safety seat 10 is lifted up from the vehicle seat S and rotated about the anchorage points, and the part of the child safety seat 10 facing the back section of the vehicle seat, or possibly the front brace 21, is pushed even further into abutment with the back section of the vehicle seat. This will furthermore provide a "gap" between the child safety seat 10 and the vehicle seat S, where the "gap" will be largest at a forward side of the child safety seat 10 and where the "gap" will decrease towards the anchorage points.

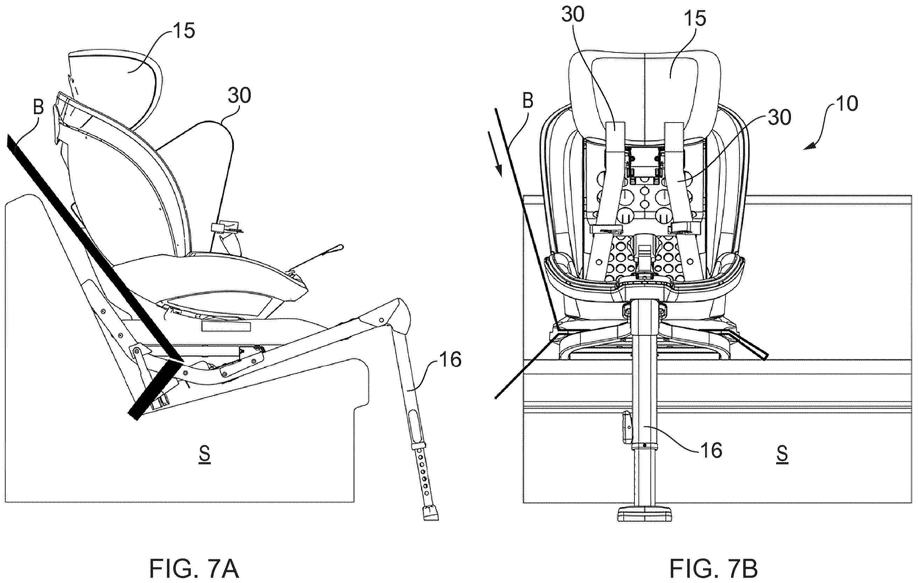

Figures 7A-7B show, seen in front view and side view, how the child safety seat 10 according to figures 6A-6D can be installed in a vehicle seat S in an alternative way, where the child safety seat 10 in this embodiment is fastened to the vehicle seat S through a safety seat belt B.

In this embodiment the child safety seat 10 is placed on the vehicle seat S and thereafter the child safety seat 10 is pushed towards a back section of the vehicle seat S, such that a part of the child safety seat 12 facing a back section of the vehicle seat, or possibly a front brace 21, is brought into abutment with the back section of the vehicle seat S. As can be seen from figure 7A, the child safety seat 10 now not arranged horizontally in the vehicle seat, whereby an upper surface of the support and connection device 19 will form an angle with a horizontal. The floor support 16 is then extended, as to be set to a correct length in order to push the child safety seat 10 up to a correct angle, where the upper surface of the support and connection device 19 is parallel with the horizontal plane. As a consequence of this adjustment of the floor support 16, the child safety seat 10 is lifted up from the vehicle seat S and rotated about its trailing edge, and the part of the child safety seat 10 facing the back section of the vehicle seat, or possibly the front brace 21, is pushed even further into abutment with the back section of the vehicle seat. This will furthermore provide a "gap" between the child safety seat 10 and the vehicle seat S, where the "gap" will be largest at a forward side of the child safety seat 10 and where the "gap" will decrease towards the trailing edge of the child safety seat 10.

When the child safety seat 10 is correctly adjusted, the safety seat belt B is used to fasten and restrain the child safety seat 10 to the vehicle seat S.

The invention has now been explained with different embodiments. Only elements related to the invention are described and a skilled person will understand that one may make several alterations and modifications to the described and shown embodiments as long as they are within the scope of the invention as defined in the following claims.

## Claims

1. A child safety seat (10) for use in a vehicle seat, the child safety seat (10) comprising a frame structure (11) on which frame structure (11) a child seat (12) is arranged, where the child seat (12) comprises a sitting section (13), a back section (14) and a head section (15), an adjustable floor support (16) connected to the frame structure (11), and fastening means for fastening the child safety seat (10) to the vehicle seat,
where the frame structure (11) comprises a first part facing a sitting section of the vehicle seat and a second part facing a back section of the vehicle seat,
**characterized in that** a support and connection device (19) for the child seat (12) is connected to the frame structure (11) and the child seat (12), where an upper surface of the support and connection device (19) forms an angle with a surface of the first part of the frame structure (11), such that the upper surface of the support and connection device (19) can be adjusted to a substantially horizontal position by adjusting the length of the adjustable floor support (16), whereby a part of the child safety seat (10) facing the back section of the vehicle seat is pushed even further into abutment with the back section of the vehicle seat and at least a foremost part of the frame structure (11) of the child safety seat (10) is raised from the sitting section of the vehicle seat.

2. A child safety seat according to claim 1,
**characterized in that** the child seat (10) is a rotatable child seat.

3. A child safety seat according to claim 1,
**characterized in that** the child seat (10) is a fixed child seat.

4. A child safety seat according to claim 1,
**characterized in that** the frame structure (11) comprises a first and second lateral element (11A, 11B), the first and second lateral elements (11A, 11B) at one end being connected through a support element (11C) for the adjustable floor support (16) and at an opposite end are connected through a transversal element (11D).

5. A child safety seat (10) according to any one of the proceeding claims,
**characterized in that** a transversal beam (18) is connected to the frame structure (11).

6. A child safety seat (10) according to claim 1,
**characterized in that** an intermediate child seat frame (22) is arranged between the frame structure (11) and the child seat (12).

7. A child safety seat (10) according to claim 6,
**characterized in that** the intermediate child seat frame (22) comprises a back section (22A) and a seat section (22B), the seat section (22B) being provided with an opening (22C).

8. A child safety seat (10) according to claim 7,
**characterized in that** a support and connection device (19) is received within the opening (22C) of the intermediate child seat frame (22).

9. A child safety seat (10) according to any one of the proceeding claims,
**characterized in that** fastening means for fastening the child safety seat (10) to the vehicle seat comprises two or more Isofix connectors (20) or guiding grooves, slits or the like.

10. A child safety seat (10) according to anyone of the proceeding claims,
**characterized in that** the frame structure (11) or the intermediate child seat frame (22) is provided with grooves or slits (35) and bolts or pins (36), where grooves or slits (35) cooperate with corresponding bolts or pins (37) provided in the child seat (12) and bolts or pins (36) cooperate with corresponding grooves or slits (38) provided in the child seat (12).

11. A child safety seat (10) according to claim 10,
**characterized in that** the grooves or slits (35) provided in the frame structure or the intermediate child seat frame (22) comprises a plurality of spaced apart recesses (35A).

12. A child safety seat (10) according to anyone of the proceeding claims,
**characterized in that** the child safety seat (10) further comprises a restraint harness system (30).

13. A child safety seat (10) according to anyone of the proceeding claims,
**characterized in that** the child safety seat (10) further comprises a brace (21).

14. A method for installation of a child safety seat (10) in a vehicle, where the child safety seat (10) comprises a frame structure (11) on which frame structure (11) a child seat (12) is arranged, where the child seat (12) comprises a sitting section (13), a back section (14) and a head section (15), an adjustable floor support (16) connected **to** the frame structure (11), and fastening means for fastening the child safety seat (10) to the vehicle seat,
**characterized in that** the method comprises the following steps:
- arranging the child safety seat (10) either forward facing or backward facing on a sitting section of the vehicle seat,
- pushing the child safety seat (10) towards a back section of the vehicle seat,
- using the fastening means to fasten the child safety seat (10) to the vehicle seat, and
- adjusting the adjustable floor support (16) to bring an upper surface of a support and connection device (19) to a substantially horizontal position, the upper surface of the support and connection device (19) forming an angle with a surface of the first part of the frame structure (11), whereby a part of the child safety seat (10) facing a back section of the vehicle seat is pushed event further into abutment with the back section of the vehicle seat and at least a foremost part of the frame structure (11) of the child safety seat (10) is raised from the sitting section of the vehicle seat.

15. A method for installation of a child safety seat (10) into a vehicle according to claim 14, **characterized in that** the method further comprises the following step: when the fastening means are in the form of Isofix connectors, connecting the Isofix connectors (20) to anchorage points in the vehicle seat.

16. A method for installation of a child safety seat (10) into a vehicle according to claim 14, **characterized in that** the method further comprises the following step: when the fastening means are in the form of guiding grooves or slits, arranging and guiding a vehicle belt of the vehicle over the guiding grooves or slits to connect the vehicle belt to attachment points in the vehicle seat.

## Patentansprüche

1. Kindersicherheitssitz (10) zum Einsatz auf einem Fahrzeugsitz, wobei der Kindersicherheitssitz (10) eine Rahmenstruktur (11) umfasst und an der Rahmenstruktur (11) ein Kinder- sitz (12) angeordnet ist, der Kindersitz (12) einen Sitzabschnitt (13), einen Rückenlehnenabschnitt (14) sowie einen Kopfabschnitt (15) umfasst, eine verstellbare Bodenstütze (16), die mit der Rahmenstruktur (11) verbunden ist, und Befestigungseinrichtungen zum Befestigen des Kindersicherheitssitzes (10) an dem Fahrzeugsitz, wobei die Rahmenstruktur (11) einen ersten Teil, der einem Sitzabschnitt des Fahrzeugsitzes zugewandt ist, sowie einen zweiten Teil umfasst, der einem Rückenlehnenabschnitt des Fahrzeugsitzes zugewandt ist, **dadurch gekennzeichnet, dass** eine Stütz-und-Verbindungs-Vorrichtung (19) für den Kindersitz (12) mit der Rahmenstruktur (11) und dem Kindersitz (12) verbunden ist, wobei eine obere Fläche der Stütz-und-Verbindungs-Vorrichtung (19) einen Winkel mit einer Fläche des ersten Teils der Rahmenstruktur (11) bildet, so dass die obere Fläche der Stütz-und-Verbindungs-Vorrichtung (19) durch Einstellen der Länge der verstellbaren Bodenstütze (16) auf eine im Wesentlichen horizontale Position eingestellt werden kann, so dass ein dem Rückenlehnenabschnitt des Fahrzeugsitzes zugewandter Teil des Kindersicherheitssitzes (10) noch weiter in anliegenden Kontakt mit dem Rückenlehnenabschnitt des Fahrzeugsitzes geschoben wird und wenigstens ein vorderster Teil der Rahmenstruktur (11) des Kindersicherheitssitzes (10) von dem Sitzabschnitt des Fahrzeugsitzes angehoben wird.

2. Kindersicherheitssitz nach Anspruch 1, **dadurch gekennzeichnet, dass** der Kinder- sitz (10) ein drehbarer Kindersitz ist.

3. Kindersicherheitssitz nach Anspruch 1, **dadurch gekennzeichnet, dass** der Kinder- sitz (10) ein fester Kindersitz ist.

4. Kindersicherheitssitz nach Anspruch 1, **dadurch gekennzeichnet, dass** die Rahmenstruktur (11) ein erstes und ein zweites Seitenelement (11A, 11B) umfasst, wobei das erste und das zweite Seitenelement (11A, 11B) an einem Ende über ein Stützelement (11C) für die verstellbare Bodenstütze (16) verbunden sind und an einem gegenüberliegenden Ende über ein Querelement (11D) verbunden sind.

5. Kindersicherheitssitz (10) nach einem der vorangehenden Ansprüche, **dadurch gekennzeichnet, dass** ein Querträger (18) mit der Rahmenstruktur (11) verbunden ist.

6. Kindersicherheitssitz (10) nach Anspruch 1, **dadurch gekennzeichnet, dass** zwischen der Rahmenstruktur (11) und dem Kindersitz (12) ein Zwischenrahmen (22) des Kindersitzes angeordnet ist.

7. Kindersicherheitssitz (10) nach Anspruch 6, **dadurch gekennzeichnet, dass** der Zwischenrahmen (22) des Kindersitzes einen Rückenlehnenabschnitt (22A) und einen Sitzabschnitt (22B) umfasst, wobei der Sitzabschnitt (22B) mit einer Öffnung (22C) versehen ist.

8. Kindersicherheitssitz (10) nach Anspruch 7, **dadurch gekennzeichnet, dass** eine Stütz-und-Verbindungs-Vorrichtung (19) im Inneren der Öffnung (22C) des Zwischenrahmens (22) des Kindersitzes aufgenommen ist.

9. Kindersicherheitssitz (10) nach einem der vorangehenden Ansprüche, **dadurch gekennzeichnet, dass** Befestigungseinrichtungen zum Befestigen des Kindersicherheitssitzes (10) an dem Fahrzeugsitz zwei oder mehr Isofix-Verbinder (20) oder Führungsnuten, Schlitze oder dergleichen umfassen.

10. Kindersicherheitssitz (10) nach einem der vorangehenden Ansprüche, **dadurch gekennzeichnet, dass** die Rahmenstruktur (11) oder der Zwischenrahmen (22) des Kindersitzes mit Nuten oder Schlitzen (35) sowie Bolzen oder Stiften (36) versehen ist, wobei Nuten oder Schlitze (35) mit entsprechenden, an dem Kindersitz (12) vorhandenen Bolzen oder Stiften (37) zusammenwirken und Bolzen oder Stifte (36) mit entsprechenden, an dem Kindersitz (12) vorhandenen Nuten oder Schlitzen (38) zusammenwirken.

11. Kindersicherheitssitz (10) nach Anspruch 10, **dadurch gekennzeichnet, dass** die an der Rahmenstruktur oder dem Zwischenrahmen (22) des Kindersitzes vorhandenen Nuten oder Schlitze (35) eine Vielzahl voneinander beabstandeter Aussparungen (35A) umfassen.

12. Kindersicherheitssitz (10) nach einem der vorangehenden Ansprüche, **dadurch gekennzeichnet, dass** der Kindersicherheitssitz (10) des Weiteren ein Sicherheitsgurt-System (30) umfasst.

13. Kindersicherheitssitz (10) nach einem der vorangehenden Ansprüche, **dadurch gekennzeichnet, dass** der Kindersicherheitssitz (10) des Weiteren eine Verstrebung (21) umfasst.

14. Verfahren zur Installation eines Kindersicherheitssitzes (10) in einem Fahrzeug, wobei der Kindersicherheitssitz (10) eine Rahmenstruktur (11) umfasst und an der Rahmenstruktur (11) ein Kindersitz (12) angeordnet ist, der Kindersitz (12) einen Sitzabschnitt (13), einen Rückenlehnenabschnitt (14) sowie einen Kopfabschnitt (15) umfasst, eine verstellbare Bodenstütze (16), die mit der Rahmenstruktur (11) verbunden ist, und Befestigungseinrichtungen zum Befestigen des Kindersicherheitssitzes (10) an dem Fahrzeugsitz, **dadurch gekennzeichnet, dass** das Verfahren die folgenden Schritte umfasst:
- Anordnen des Kindersicherheitssitzes (10) entweder nach vorn oder nach hinten gewandt auf einem Sitzabschnitt des Fahrzeugsitzes,
- Schieben des Kindersicherheitssitzes (10) in Richtung eines Rückenlehnenabschnitts des Fahrzeugsitzes,
- Befestigen des Kindersicherheitssitzes (10) an dem Fahrzeugsitz unter Verwendung der Befestigungseinrichtungen, sowie
- Einstellen der verstellbaren Bodenstütze (16), um eine obere Fläche einer Stütz-und-Verbindungs-Vorrichtung (19) in eine im Wesentlichen horizontale Position zu bringen, wobei die obere Fläche der Stütz-und-Verbindungs-Vorrichtung (19) einen Winkel mit einer Fläche des ersten Teils der Rahmenstruktur (11) bildet, so dass ein einem Rückenlehnenabschnitt des Fahrzeugsitzes zugewandter Teil des Kindersicherheitssitzes (10) noch weiter in anliegenden Kontakt mit dem Rückenlehnenabschnitt des Fahrzeugsitzes geschoben wird und wenigstens ein vorderster Teil der Rahmenstruktur (11) des Kindersicherheitssitzes (10) von dem Sitzabschnitt des Fahrzeugsitzes angehoben wird.

15. Verfahren zur Installation eines Kindersicherheitssitzes (10) in einem Fahrzeug nach Anspruch 14, **dadurch gekennzeichnet, dass** das Verfahren des Weiteren den folgenden Schritt umfasst:
Verbinden der Isofix-Verbinder (20) mit Verankerungspunkten an dem Fahrzeugsitz, wenn die Befestigungseinrichtungen die Form von Isofix-Verbindern haben.

16. Verfahren zur Installation eines Kindersicherheitssitzes (10) in einem Fahrzeug nach Anspruch 14, **dadurch gekennzeichnet, dass** das Verfahren des Weiteren den folgenden Schritt umfasst:
Anordnen und Führen eines Fahrzeuggurtes des Fahrzeugs über die Führungsnuten oder Schlitze zum Verbinden des Fahrzeuggurtes mit Anbringungspunkten an dem Fahrzeugsitz, wenn die Befestigungseinrichtungen die Form von Führungsnuten oder Schlitzen haben.

## Revendications

1. Siège de sécurité pour enfant (10) pour une utilisation dans un siège de véhicule, le siège de sécurité pour enfant (10) comprenant une structure de cadre (11) sur laquelle structure de cadre (11) un siège pour enfant (12) est agencé, où le siège pour enfant (12) comprend une section d'assise (13), une section de dossier (14) et une section de tête (15), un support de plancher réglable (16) relié à la structure de cadre (11), et des moyens de fixation pour fixer le siège de sécurité pour enfant (10) au siège de véhicule,
où la structure de cadre (11) comprend une première partie faisant face à une section d'assise du siège de véhicule et une deuxième partie faisant face à une section de dossier du siège de véhicule,
**caractérisé en ce qu'**un dispositif de support et de liaison (19) pour le siège pour enfant (12) est relié à la structure de cadre (11) et au siège pour enfant (12), où une surface supérieure du dispositif de support et de liaison (19) forme un angle avec une surface de la première partie de la structure de cadre (11), de sorte que la surface supérieure du dispositif de support et de liaison (19) puisse être réglée dans une position sensiblement horizontale par le réglage de la longueur du support de plancher réglable (16), ce par quoi une partie du siège de sécurité pour enfant (10) faisant face à la section de dossier du siège de véhicule est poussée encore plus loin en butée avec la section de dossier du siège de véhicule et au moins une partie la plus en avant de la structure de cadre (11) du siège de sécurité pour enfant (10) est surélevée par rapport à la section d'assise du siège de véhicule.

2. Siège de sécurité pour enfant selon la revendication 1,
**caractérisé en ce que** le siège pour enfant (10) est un siège pour enfant rotatif.

3. Siège de sécurité pour enfant selon la revendication 1,
**caractérisé en ce que** le siège pour enfant (10) est un siège pour enfant fixe.

4. Siège de sécurité pour enfant selon la revendication 1,
**caractérisé en ce que** la structure de cadre (11) comprend un premier et un deuxième élément latéral (11A, 11B), les premier et deuxième éléments latéraux (11A, 11B) à une extrémité étant reliés par le biais d'un élément de support (11C) pour le support de plancher réglable (16) et à une extrémité opposée sont reliés par le biais d'un élément transversal (11D).

5. Siège de sécurité pour enfant (10) selon l'une quelconque des revendications précédentes,
**caractérisé en ce qu'**une poutre transversale (18) est reliée à la structure de cadre (11).

6. Siège de sécurité pour enfant (10) selon la revendication 1,
**caractérisé en ce qu'**un cadre intermédiaire de siège pour enfant (22) est agencé entre la structure de cadre (11) et le siège pour enfant (12).

7. Siège de sécurité pour enfant (10) selon la revendication 6,
**caractérisé en ce que** le cadre intermédiaire de siège pour enfant (22) comprend une section de dossier (22A) et une section de siège (22B), la section de siège (22B) étant munie d'une ouverture (22C).

8. Siège de sécurité pour enfant (10) selon la revendication 7,
**caractérisé en ce qu'**un dispositif de support et de liaison (19) est reçu à l'intérieur de l'ouverture (22C) du cadre intermédiaire de siège pour enfant (22).

9. Siège de sécurité pour enfant (10) selon l'une quelconque des revendications précédentes,
**caractérisé en ce que** les moyens de fixation pour fixer le siège de sécurité pour enfant (10) au siège de véhicule comprennent deux connecteurs Isofix (20) ou plus ou des rainures de guidage, des fentes ou similaires.

10. Siège de sécurité pour enfant (10) selon l'une quelconque des revendications précédentes,
**caractérisé en ce que** la structure de cadre (11) ou le cadre intermédiaire de siège pour enfant (22) est muni(e) de rainures ou de fentes (35) et de boulons ou de goupilles (36), où des rainures ou des fentes (35) coopèrent avec des boulons ou des goupilles (37) correspondant(e)s ménagé(e)s dans le siège pour enfant (12) et des boulons ou des goupilles (36) coopèrent avec des rainures ou des fentes (38) correspondantes ménagées dans le siège pour enfant (12).

11. Siège de sécurité pour enfant (10) selon la revendication 10,
**caractérisé en ce que** les rainures ou les fentes (35) ménagées dans la structure de cadre ou le cadre intermédiaire de siège pour enfant (22) comprennent une pluralité d'évidements espacés (35A).

12. Siège de sécurité pour enfant (10) selon l'une quelconque des revendications précédentes,
**caractérisé en ce que** le siège de sécurité pour enfant (10) comprend en outre un système de harnais de retenue (30).

13. Siège de sécurité pour enfant (10) selon l'une quelconque des revendications précédentes,
**caractérisé en ce que** le siège de sécurité pour enfant (10) comprend en outre une armature (21).

14. Procédé pour l'installation d'un siège de sécurité pour enfant (10) dans un véhicule, où le siège de sécurité pour enfant (10) comprend une structure de cadre (11) sur laquelle structure de cadre (11) un siège pour enfant (12) est agencé, où le siège pour enfant (12) comprend une section d'assise (13), une section de dossier (14) et une section de tête (15), un support de plancher réglable (16) relié à la structure de cadre (11), et des moyens de fixation pour fixer le siège de sécurité pour enfant (10) au siège de véhicule,
**caractérisé en ce que** le procédé comprend les étapes suivantes :
- agencer le siège de sécurité pour enfant (10) soit faisant face vers l'avant ou soit faisant face vers l'arrière sur une section d'assise du siège de véhicule,
- pousser le siège de sécurité pour enfant (10) vers une section de dossier du siège de véhicule,
- utiliser les moyens de fixation pour fixer le siège de sécurité pour enfant (10) au siège de véhicule, et
- régler le support de plancher réglable (16) pour amener une surface supérieure d'un dispositif de support et de liaison (19) dans une position sensiblement horizontale, la surface supérieure du dispositif de support et de liaison (19) formant un angle avec une surface de la première partie de la structure de cadre (11), ce par quoi une partie du siège de sécurité pour enfant (10) faisant face à une section de dossier du siège de véhicule est poussée encore plus loin en butée avec la section de dossier du siège de véhicule et au moins une partie la plus en avant de la structure de cadre (11) du siège de sécurité pour enfant (10) est surélevée par rapport à la section d'assise du siège de véhicule.

15. Procédé pour l'installation d'un siège de sécurité pour enfant (10) dans un véhicule selon la revendication 14, **caractérisé en ce que** le procédé comprend en outre l'étape suivante : lorsque les moyens de fixation se présentent sous la forme de connecteurs Isofix, relier les connecteurs Isofix (20) à des points d'ancrage dans le siège de véhicule.

16. Procédé pour l'installation d'un siège de sécurité pour enfant (10) dans un véhicule selon la revendication 14, **caractérisé en ce que** le procédé comprend en outre l'étape suivante : lorsque les moyens de fixation se présentent sous la forme de rainures de guidages ou de fentes, agencer et guider une ceinture de véhicule du véhicule sur les rainures de guidage ou les fentes pour relier la ceinture de véhicule à des points de fixation dans le siège de véhicule.
